# EUROPEAN PATENT APPLICATION

(11) **EP 0 743 782 A1**
(43) Date of publication of application: **20.11.1996**
(21) Application number: 96107679.1
(22) Date of filing: 14.05.1996
(51) Int. Cl.: H04M 11/02, H04M 11/04, H04B 7/26

(54) **Communications and alarm system to connect temporarily, at short distance, portable radio transceivers with an entry door intercom installation**

(30) Priority: 17.05.1995 IT MI951000
(71) Applicant: Cattaneo, Aurelio, 20124 Milano (IT); Rizzi, Silvana, 20149 Milano (IT)
(72) Inventor: Cattaneo, Aurelio, 20124 Milano (IT)
(74) Representative: Faggioni, Giovanmaria, Dr.

(57) **Abstract**

Communications and alarm system among people that are, respectively, outside and inside a building equipped with an entry door intercom installation including one external calling station located on the side of the building's entry door and several answering stations located inside the apartments and linked to the calling station, on one hand, by means of a bidirectional talking channel common to all stations and, on the other hand, by means of separated unidirectional calling channels. According to the invention, one radio transceiving and switching set is provided, connected to said calling station, by means of which, transmissions are possible from and to a plurality of portable radio transceivers, all tuned on the same frequency, being each of them enabled to transmit at least a coded calling radio signal peculiar to the transceiver. Said transceiving and switching set is enabled to recognize, on the basis of said signal's decoding, only one pre-set answering station of the entry door intercom installation, in order to establish a communication link between said answering station and said calling portable transceiver.

## Description

It's well known, above all in big towns with high degree of criminality, the need of security against possible assaults (e.g. robberies, aggressions and similar), mostly in the case of people entering alone, especially by night, in residential buildings and homes.

Owing to the fact that the duration of this type of danger is very short, the possible police intervention may not arrive in due time.

The ground idea of the present invention, in order to increase security for people who are in said particular circumstance, is that of proposing an efficient and cheap means to enable a person who is outside a building - e.g. a person who after having parked the car has to walk along the street from the parking area to the building's entry door - to communicate, in order to ask attention or help, with people who are inside a building's apartment and/or, in case of danger, to activate an alarm (e.g. a lamp, a siren or similar) installed above the entry door, and, in case, in the court-yard and/or garage, as deterrent against the assault and notice to neighbours.

At present equipments are effectively already available that can enable people outside a building to communicate with people inside the building's apartments : these are precisely the well known entry door intercom installations also called "electric porter". These equipments can nevertheless be utilized only on the external side of the building's main door and for this reason cannot solve the security problem in proximity to the building, that is in the above mentioned circumstances.

The problem to be solved is therefore to enable people who are at short distance from the building they are entering into, to call, to talk and in case to give an alarm to people inside the apartment or building, by means of a portable telecom device, within a telecom system apt to guarantee low cost, ease of use and high reliability.

It's of course possible to solve the above mentioned problem with a wide variety of already known telecom technologies. From the simplest ones (e.g. private "walkie-talkie" in CB band) to the most advanced ones (e.g. mobile cellular phones linked to the public telephone network).

All the possible solutions with the today known technologies have some disadvantages relevant to costs (equipment plus relevant assembly) and/or to ease of use and/or to reliability.

For instance, mobile cellular phones have not only high costs, but in addition cannot always guarantee the immediate reception of the call, e.g. when the called number is engaged. Additional installations are morever needed from each apartment's phone to an alarm system.
On the other hand "walkie-talkies", that are remarkably cheaper, cannot be used in case of a wide utilization for said security purposes - e.g. in the case of tenths or hundreds of apartments in the same town's street using each one its own "walkie-talkie" system - for reliability problems (interferences among systems, bad radio propagation through walls, etc.). The latter problems should be partially solved only with additional equipments (e.g. digital decoder, power supply, wiring to an external antenna, external alarm, etc.) whose remarkable additional costs should be sustained by each user within its own apartment.

The present invention finds an innovative solution to the above mentioned problem essentially owing to the fact that said communications and security system based on a traditional entry door intercom installation - made up of an external fixed station, for calling and talking purposes, located on the side of the building's main door, said calling station being linked to the apartments' answering stations, on one hand, by a single bidirectional talking channel, common to all stations and, on the other hand, separately towards each of these stations by means of relevant monodirectional calling channels - is characterized by the fact of having in addition :
- at least a plurality of portable radio transceivers, all tuned on the same frequency, being each of them enabled to transmit at least a coded calling radio signal different, as far as the whole code is concerned, from whichever code transmitted by the others portable radio transceivers,
- and at least a single radio transceiving and switching unit associated with said external fixed station, for calling and talking purposes, already described as a part of the entry door intercom installation enabled :
- to receive said coded calling radio signal
- to recognize, on the basis of said signal's decoding, only one pre-set of said calling channels of the intercom installation,
- and to insert into said channel toward only one pre-set correspondent answering station at least a calling signal of limited duration having electrical characteristics similar to the ones normally produced by the external fixed calling station of the intercom installation.

As it can be therefore understood, the communications and alarm system, according to the invention, enables to transfer (to switch) temporarily - by means of a fixed radio transceiver linked to the external calling station of an entry door intercom installation - the performances of said external calling station to a portable radio transceiver that has transmitted a coded and recognized calling and/or alarm signal. In other words it is possible, according to the present invention, to exploit the existing entry door intercom installation - that already links by means of wires the external fixed calling station (made up of calling pushbuttons keyboard, microphone and loudspeaker, located on the side of the building main entry door) with the internal answering stations (interphones located inside the apartments) - to connect, only for infrequent and short time durations (e.g. automatically limited to 30 seconds for the already mentioned security function), the calling portable transceivers with the called apartments with very simple means and therefore with very low costs.

These costs are indeed :
- for each single apartment : the cost of a portable transceiver (e.g. CB type) with an added digital code generator according to the present invention (but it's of course possible to envisage as many portable transceivers - all with the same digital code - as are the persons living in the apartment) ;
- for the entry door intercom installation : the cost of a radio transceiving and switching unit, that's only one for the whole building (whose cost is therefore shared among all the apartments).

The present invention guarantees therefore not only the lowest cost per apartment of whichever other solutions with the known technologies, but also ease of use (calling and alarm pushbuttons within the portable transceiver) and high reliability.

Further features and advantages of the system according to the present invention are better clarified from the following detailed description of a preferred mode of implementation, outlined in the enclosed drawings among which :
Fig. 1 it's a general outline of the communications and alarm system according to the present invention;
Fig.2 represents the logical sequence of events that corresponds to a communications and alarm connection utilizing the system of fig.1,
Fig.3 represents, with more details, the fixed part of the system according to the present invention.

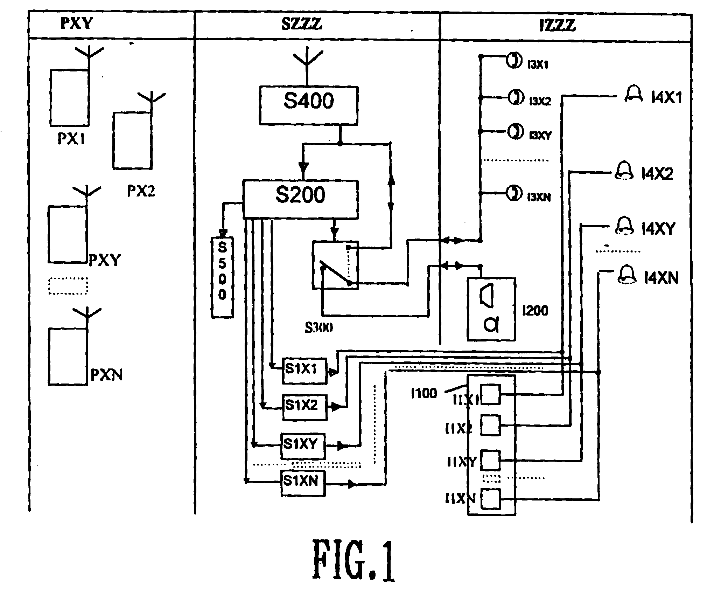

As already said, Fig. 1 represents the functional scheme (principal components and relevant connections) of the communications and alarm system according to the invention, having the system the capability of performing the following three main functions :
- "validation and addressing of the calls" arriving from the portable radio transceivers;
- "audio switching" (e.g. "by-pass" for a limited amount of time of the microphone and loudspeaker of the external intercom station and connection between the calling portable transceiver and the internal interphone called);
- "validation and activation of the alarm".

For these purposes the system, according to the invention, is essentially made up of the fixed transceiving and switching set SZZZ that's connected , on one hand - by means of conductive wires with interposed calling actuators (one per apartment) and switching actuator (single) - with an entry door intercom installation IZZZ of common kind and, on the other hand, by radio, with portable transceivers PXY (all operating on the same radio frequency of the transceiving set SZZZ).
SZZZ set is made up, in particular, by :
- S400 unit which is the fixed radio transceiver that communicates, by radio, with the portable radio transceivers PX1, PX2....PXY....PXN being X the building reference and Y the apartment reference of the N apartments of the building provided with said portable transceivers (one or more);
- S200 unit which is the control unit that, after a positive validation of the incoming digital signals, call and/or alarm ones, transmitted by PXY, activates, on one hand, one pre-set S1XY of the calling actuators S1X1, S1X2....S1XY....S1XN and, on the other hand, the audio switching actuator S300.
S200 unit has in addition the duty of the activation of the alarm actuator S500.

The entry door intercom installation IZZZ is made up, in its most common structure, by:
- the external station - later on named also calling station - made up by a keyboard I100 with calling pushbuttons I1X1, I1X2....I1XY....I1XN besides the microphone and loudspeaker unit I200 and
- the internal stations - later on named also answering stations - made up by the interphones I3X1, I3X2....I3XY....I3XN with the relevant call bells I4X1, I4X2....I4XY....I4XN.

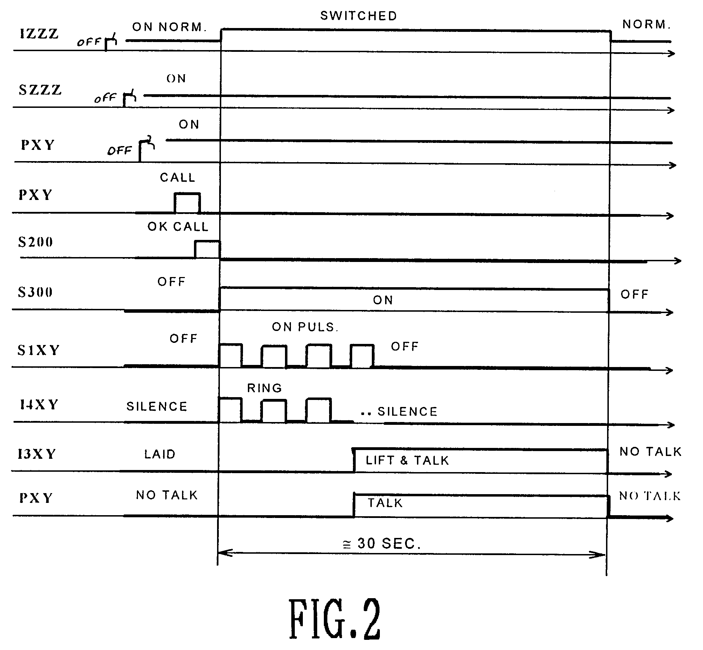

Fig. 2 represents, as already said, the logical sequence of events that explains the manner in which the components of the functional scheme of Fig.1 interact each other in order to allow the temporary connection of the calling portable transceiver PXY with the internal answering station, that is with the corresponding apartment's interphone I3XY and call bell I4XY (being PXY, I3XY and I4XY belonging to the same building X and to the same apartment Y, being in addition the same digital codes X and Y registered within PXY and S200).

For each component ( from top to bottom in hierarchic sequence) is represented, in function of the time (horizontal axis) the change of state and/or the development of a specific function (vertical axis).

The sequence starts with the transition from power OFF to power ON of IZZZ, followed by similar transitions for SZZZ and PXY (the latter when necessary to the person who is on the point of entering in the building as better described later).

A calling signal transmitted by PXY and received and demodulated by the unit S400 (not represented for simplicity in Fig.2) is checked by the unit S200 that, if the calling signal is validated, activates for an automatically limited duration (e.g. about 30 seconds) the audio switching actuator S300 as well as, for a duration also automatically limited but shorter, e.g. about 10 seconds in a pulsed mode, the calling actuator S1XY.

Within the apartment XY the intercom call bell I4XY rings in a pulsed mode and, when the hand-set of the interphone I3XY is lifted, the talking connection is activated so that it is possible, e.g. for about other 20 seconds, to talk directly between PXY and I3XY, by means of the audio switching actuator that, in this phase is by-passing the external microphone and loudspeaker unit I200 of the intercom installation.

The ring of I4XY is always normally stopped after about 10 seconds but, in addition to it, in some intercom installations it's included the feature of ring stop as soon as the hand-set I3XY is lifted.

At the end of S300 activation (audio switching for about 30 seconds) the by-pass of the external, unit I200 is terminated and the intercom installation returns to its normal operating mode.

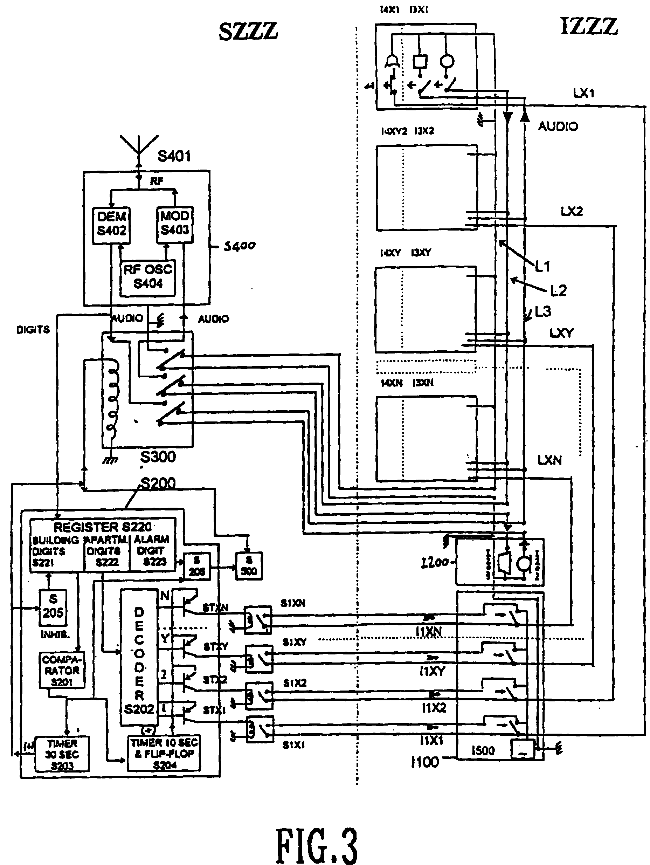

Fig.3, in the sphere of functional scheme of Fig. 1 and of logic and hierarchic sequence of Fig.2, outlines a complete switching set according to the present invention connected to an entry door intercom installation.

It's nevertheless obvious for a technician expert in this field the manner of realization, simply leaving out some components, of a cheaper unidirectional switching set with the only call and alarm functions.

In particular the entry door intercom installation represented in the example of Fig.3 is the simplest and most common one : it is in fact equipped with three common wires L1, L2 and L3 for the audio bidirectional communications and by separated wires (one for each apartment) LX1, LX2....LXY....LXN for the calls by means of the pushbuttons belonging to the keyboard I100 part of the external calling station. For the sake of description's simplicity are not represented door-opening circuits, possible porter's switchboard, possible video systems added to the audio one and all the other common components not meaningful for the operations of the present invention.

With the same sake of description's simplicity, for whichever component of Fig.3 are not represented nor described power supplies, filters, amplifiers, transformers, "clock" generators and parity comparators (for checking purposes) relevant to serial digital signals as well as other well known electrical and electronic circuits utilized for the operations of said components.

Though the manner of realization of the present invention represented as one of possible examples in Fig.3, can be considered as one of the most immediate and cheap for the most common type of entry door intercom installation, it's clear to expert technicians that for other types of intercom installations the switching system object of the present invention can easily adapted with minor and non conceptual modifications.

Making now specific reference to the drawing of Fig.3, on the right part of the drawing can be observed the entry door intercom installation IZZZ while on the left part can be observed the communications and switching system SZZZ; the latter is made up, above all, by the fixed radio transceiver S400, with the relevant antenna S401 by means of which the radio frequency signal emitted by a calling portable transceiver is received (it's of course possible to transmit signals in the opposite way).

The radio frequency signal is demodulated by S402 demodulator when the carrier frequencies are tuned i.e. identical. Within S400 the radio frequency oscillator S404 can supply to demodulator S402 and to modulator S403 the same carrier frequency or two different frequencies according to the transmission mode utilized (one radio channel for both the ways, as for the "walkie-talkie", or two channels for the two transmission ways). In both the cases, at least for the transmission by the apartment's interphone that must not be modified, the drive for "trasmission power ON" must be supplied by an automatic circuit (e.g. "VOX") instead by a manual pushbutton (e.g. push to talk "PTT").

The operating sequence of the communication and alarm system according to the invention starts when - owing to the reception by the S401 antenna of a radio signal coming from a portable transceiver PXY - the unit S400 issues a demodulated audio frequency signal that's contemporarily entering into the audio switching actuator S300 and into the control unit S200. In the latter unit - being in this phase the signal a serial digital one at audio frequency - the signal is checked and recognized as a valid incoming call.

Actually, at the point of communication's beginning, the portable transceiver modulates to radio frequency and transmits first of all an audio frequency serial digital signal made up of a digits' sequence of conventional type; said digits' sequence is registered in S220 being of course identical the digital "clocks" of transmission and reception.

Immediately after, within S200, a comparison is made between the first part of the received and registered sequence (building code) and an identical already memorized sequence, and the received signal is validated only if there is a correspondence of the two sequencies (identity of building codes).

In particular the digits' sequence transmitted is divided, according to a characteristic of the present invention, in three parts : the first one (building code) is registered in the first part S221 of the register, the second one (apartment code) is registered in S222 and the third one (alarm code : existing only when an alarm call is specifically transmitted) is registered in S223.

In other words, the portable transceiver is equipped with a call pushbutton that, when pushed, activates the transmission of the first two parts of the code's sequence, as well as by an alarm pushbutton that activates the transmission of all the three parts of the code. Of course all the portable transceivers relevant to the same building will transmit identical X building codes and different Y apartment codes.

The S200 control unit, in the example of Fig.3, operates in the following manner. The building digits in S221 are checked as identical to the ones memorized within the comparator S201; a positive check activates the switching timer S203 and by consequence, by means of the positive voltage issued for a limited duration by S203, also the audio switching actuator S300 (relay with three contacts and two ways per contact).

Another activation, by the same positive check in S201, is given to the timer & flip-flop S204 that issues a positive pulsed voltage for a duration shorter than the previous one.
At the same time the apartment digits in S222 are decoded by S202 decoder that, of all its outputs 1, 2...Y....N, activates the Y one corresponding to the called apartment Y. In the example of Fig.3 the activation of one of S202 outputs means to change the output voltage from positive to earth; in this manner of all the transistors STX1, STX2....STXY....STXN - that have the bases connected one by one with the outputs of S202 and all the emitters connected together with the output of S204 - only that one corresponding to the apartment's code received is activated in a pulsed mode.

By consequence, of all the calling actuators ( normally open one contact relays) S1X1, S1X2....S1XY....S1XN, only that one connected with the output (collector) of the activated transistor is similarly activated, issuing in this manner a calling pulsed signal, for a duration determined by S204, through the calling intercom circuits towards the called apartment.

That's possible because, as can be seen from the electrical connections of Fig.3, the activation of one of the calling actuators S1X1, S1X2....S1XY....S1XN produces for the intercom installation the same effect produced by pushing one of the calling pushbuttons I1X1, I1X2....I1XY....I1XN of the external station keyboard that issue to the corresponding call bell I4X1, I4X2....I4XY....I4XN, the alternate current supplied by I500.

The principal functions of the control unit S200 have been explained in the sense that, if in the called apartment the hand-set of the interphone is lifted, the microphone and the receiver of said hand-set (i.e. one of the sub-units I3X1, I3X2....I3XY....I3XN) are directly connected with the receiver and the microphone of the portable calling transceiver.

That's possible because the lifting of the hand-set I3XY connects (by means of spring contacts as outlined in I3X1 of Fig.3) the answering station (apartment's interphone) with the three audio common wires L1, L2, L3 of the intercom installation being the latter, owing to the temporary activation of S300 (connected as indicated in Fig.3), temporarily connected with S400.

The above description is relevant, as already said, to the communication system; but to that is nevertheless joined, according to an important feature of the present invention, an alarm function. For this purpose the S206 comparator is provided that- when the digits sequence sent to S200 is comprehensive of said alarm digit, registered in S223 - activates the S500 alarm actuator for a duration determined by the timer S203.

In whichever case, at the end of the switching time determined by the timer S203, all the initial conditions are restored and the entry door intercom installations operates normally, with the switching and calling relays in the normal state, i.e. not excited, as represented in Fig.3, and with all the calling and talking signals flowing in the usual wiring of the intercom installation.

The calls are then possible only by means of the pushbuttons I1X1, I1X2....I1XY....I1XN and the audio wires L1, L2, L3 are connected to the microphone I202 and to the loudspeaker I203 of the external calling station.

According to another characteristic of the present invention, each one of the portable transceivers may be provided by an additional pushbutton that enables to transmit a calling and driving signal; this signal includes, within its initial coded part, not only the already mentioned codes but also an additional code to be interpreted as a driving command e.g. for opening a main door or a gate.

According to another additional characteristic of the present invention, within the S200 unit an inhibition function, by means of the device S205, may be provided in order to inhibit - during the switching time (about 30 seconds) - the registration of whichever other digital signal in the S220 register; that to the purpose of avoid interferencies. Similarly it's possible to inhibit the alarm function in order to avoid misuses.

From the above given description it's easy to understand the advantages of the system according to the invention, already mentioned at the beginning, in comparison with the today known and commercially available solutions. Said advantages are of course not only relevant to the full utilization of the entry door intercom installation (call, talk and if necessary central alarm) but also relevant to the partial utilization(call and alarm without talk).

In particular, as far as reliability problems are concerned, the interferencies among different digital call and alarm signals (that are the "core" of the security signals) are practically negligible owing to the fact that said digital signals are made up of three parts (building, apartment and alarm codes) and it's easy to understand the possibility of having a number of building digits surely enough to give a very high number of possible combinations (e.g. as in the well-known remote controls for gate openers).

The probability of contemporary intercom call in the same building is very low, owing to the fact that the transmission of calling and alarm security signals is very unfrequent and in addition the system imposes a short duration of the security talk (e.g. 30 seconds).

It's also possible to observe that this rare type of interference can also be considered an aid for the security (two persons entering contemporarily in the same building).

It's in any case understood that the invention is not limited to the particular configuration previously explained, that's only an example not limiting the width of the applications of the invention, but that several variations are possible, all envisaged by technicians expert in the field, without getting over the sphere of the invention.

In particular it's evident that the invention may be applied identically to entry door intercom installations with or without additional video monitors. Likewise it is possible to equip each portable radio transceiver with an additional pushbutton in order to transmit a call and driving signal in which the digital code includes, in addition to said address codes, another part to be recognized as a drive for door or gate opening.

On the other hand the intercom installation may be made up by wirings and connections of traditional type as well as be different from what described with regard to the monodirectional calling channels (LXY) and/or to the bidirectional talking channels (L1, L2, L3) by wiring simplification and/or signal's digitalization, with consequent differentiation of system's elements that interface the intercom installation, that are the switching actuator and the calling actuators, according to the different electrical and electronic characteristics of said intercom installation.

## Claims

1. Communications and alarm system among people who are, respectively, outside at short distance, and inside a building equipped with an entry door intercom installation, the latter comprising one external fixed calling station, with calling and talking features, located on the side of the building's entry door, and several internal answering stations, with answering and talking features, each of them being located within one of the building's apartments, said calling station being connected with the answering ones, on one hand, by a single bidirectional talking channel, common to all stations and, on the other hand, separately towards each of these stations by means of relevant monodirectional calling channels, characterized by the fact of having in addition
- at least a plurality of portable radio transceivers, all tuned on the same frequency, being each of them enabled to transmit, at least, a coded calling radio signal, different, as far as the whole code is concerned, from whichever code transmitted by the other portable radio transceivers,
- and at least a single radio transceiving and switching set associated to said external fixed calling station enabled :
- to receive said coded calling radio signal,
- to recognize, on the basis of said signal's decoding, only a pre-set one of said calling channels of the intercom installation and
- to insert into said channel, toward only a pre-set correspondent answering station, at least a calling signal of limited duration having electrical characteristics similar to the ones normally produced by the external fixed calling station of the intercom installation.

2. System as in 1), in which each of said portable radio transceivers is apt to both transmit said coded calling radio signal and to transmit and to receive "audio type" radio signals for talking purposes, and in which said radio transceiving and switching set is apt to switch the connection of said common bidirectional talking channel of the intercom installation on the radio transceiving channel in order to allow talking between said pre-set answering station and said portable radio transceiver.

3. System as in 1) and 2) in which said switching is generated for a limited amount of time, preferably around 30 seconds.

4. System as in anyone of the previous claims, in which said coded calling radio signal includes
- a first part of the code, identical for all the portable radio transceivers associated to the same building but different from the ones of other portable radio transceivers associated to different buildings
- a second part of the code, distinctive of each of the building's apartments and common for all portable transceivers associated to said single apartment but different from the ones of other portable transceivers associated to other apartments,
- a third part of the code distinctive of a simple calling signal or of a combined calling & alarm signal.

5. System as in anyone of the previous claims, in which said radio transceiving and switching set includes a control unit equipped, on one hand, with a comparator apt to compare the first part of the code of said calling radio signal with a code registered in its own memory and to give out a consent signal only if the result of the comparison, associated to the building, is positive, being also equipped with a decoder apt to recognize, in function of the second part of the code, the called apartment, and being said control unit, on the other hand, equipped with a switching actuation sub-unit apt to address radio calls and talks towards the intercom installation in function of said consent signal and of said apartment's recognition.

6. System as in 5), in which said switching actuation sub-unit includes at least a series of call actuators each of them (S1XY) being connected to one (LXY) of said unidirectional calling channels of the intercom installation.

7. System as in 5), in which said switching actuation sub-unit includes at least one audio switch actuator (S300) connected to the common bidirectional talking channel of the intercom installation (L1, L2, L3).

8. System as in 5), in which said switching actuation unit includes at least an alarm actuator (S500).

9. System as in 5), in which said control unit is also equipped with a timer in order to activate the switching actuation sub-unit only for a limited amount of time.

10. System as in 5), in which the radio signal, transmitted by portable transceivers, is made up of a short duration initial part of digital codes, and of successive parts of analogic audio frequency signals, said control unit being apt to check and decode said initial part in order to drive the switching actuation sub-unit and to insert and draw the successive parts directly to and from said common bidirectional talking channel, as soon as the audio switching has been actuated.

11. System as in anyone of the previous claims, in which each portable radio transceiver is equipped with two calling pushbuttons, the first one for simple calling, i.e. only for the transmission of at least the building and apartment address codes, and the second one for call and alarm, i.e. for the transmission of the alarm code in addition to the building and apartment ones.

12. System as in 11), in which each portable radio transceiver is equipped with an additional pushbutton in order to transmit a call and driving signal in which the digital code includes, in addition to said address codes, another part to be recognized as a drive for door or gate opening.

13. System as in anyone of the previous claims wherein said entry door intercom installation (or the equivalent audio portion of a videophone intercom installation and/or the equivalent intercom portion of an integrated telephone-intercom installation) differs from the most common intercom installations for different systems and structures of external and internal stations, and/or for different calling and talking wiring systems including "bus" or wireless connections, and/or for different calling systems (e.g. digital coded ones), and/or for different audio communication systems (e.g. intermediate sections digital instead of analogic), and consequently said switching system is adapted to the different peculiarities of the intercom installation as far as switching system's components that interface the intercom installation are concerned (i.e. the actuators) and in particular for calling with one or more calling actuators able to temporarily reproduce within the intercom installation the identical effects caused by a call from the external station and for audio switching with one actuator able to temporarily switch the audio signals of the intercom installation, by definition analogic immediately upstream the loudspeaker and downstream the microphone of the external station, from said external station to the fixed radio transceiver.
